Europäisches Patentamt

European Patent Office

Office européen des brevets

(11) Publication number: **0 396 281**
**A2**

## (12) EUROPEAN PATENT APPLICATION

(21) Application number: **90304205.9**

(22) Date of filing: **19.04.90**

(51) Int. Cl.⁵: **B29C 67/14, B29D 31/00**

(30) Priority: **03.05.89 GB 8910068**

(43) Date of publication of application:
**07.11.90 Bulletin 90/45**

(84) Designated Contracting States:
**CH DE FR GB IT LI SE**

(71) Applicant: **WESTLAND HELICOPTERS LIMITED**
**Group Patents Dept. Box 206 Westland**
**Works**
**Yeovil Somerset BA20 2YB(GB)**

(72) Inventor: **Breakspear, Colin James**
**Portcullis End, The Hill**
**Langport, Somerset(GB)**

(74) Representative: **Jack, Bruce James et al**
**FORRESTER & BOEHMERT**
**Widenmayerstrasse 4/I**
**D-8000 Munchen 22(DE)**

(54) **Method for producing a component from fibre-reinforced plastic materials.**

(57) A method for producing a component having a wedge-shaped cross section from fibre reinforced plastic material comprises laying a plurality of sheets of such material in a stack with adjacent sheets staggered in a widthwise direction, cutting the stack longitudinally to form two part stacks, joining the part stacks so that the cut edges form a common edge of the joined part stacks and consolidating and curing the assembly to form the component.

Fig. 1.

## METHOD FOR PRODUCING A COMPONENT FROM FIBRE-REINFORCED PLASTIC MATERIALS

This invention relates to a method for producing a component from fibre-reinforced plastic materials and is particularly concerned with producing components having a wedge-shaped cross-section.

Fibre-reinforced plastic material is available in sheet form in which a layer of either woven or unidirectional fibres is impregnated with either a thermosetting or thermoplastic resin, and this invention is concerned with the use of such fibre-reinforced plastic (f.r.p.) materials in the manufacture of components having a generally wedge-shaped cross-section. Such components are often required as fillers in f.r.p. assemblies as well as being useful in the manufacture of cylindrical or part cylindrical shapes.

Hitherto two methods have been used in the manufacture of wedge-shaped f.r.p. components. Firstly, a desired number of strips are cut from a sheet of f.r.p. material with differing width dimensions, and are laid in a stack and consolidated. The wedge-shaped cross-section is obtained by laying progressively narrower width sheets throughout the thickness of the stack. Very narrow strips are difficult to cut and their frailty makes them inconvenient to lay-up by hand as well as posing problems in an automated process. Alternatively, as shown in US-A-4413860, a generally rectangular cross-section shape can be laid up in a stack from a desired number of sheets of f.r.p. material of substantially constant width dimension. The stack is then consolidated and cut into a plurality of individual wedge-shaped components, however, this process is difficult, wasteful of material and the physical properties certainly of individual components may be compromised. Furthermore this process is not suitable for the manufacture of long components having a wedge-shaped cross section.

It is therefore an objective of this invention to provide a method for the manufacture of f.r.p. components with a wedge-shaped cross-sectional shape which overcomes the problems associated with prior methods.

Accordingly, this invention provides a method for producing a component having a wedge-shaped cross section from fibre-reinforced plastic material characterised by the steps of cutting a plurality of sheets of material to a desired length dimension and a predetermined substantially similar width dimension, laying said sheets in a stack with adjacent sheets staggered in a width-wise direction, cutting the stack longitudinally to form two part stacks in which the widths of the individual sheets from the cut edges vary throughout the thickness of each part stack from a minimum width dimension to a maximum width dimension, orienting and joining the part stacks so that the cut edges form a common edge of the joined part stacks, and consolidating and curing the assembly to form the component.

Preferably, the minimum width dimension sheets of the part stacks are located adjacent each other at the centre of the assembled part stacks.

In one embodiment the adjacent sheets are staggered uniformly throughout the stack and the stack is cut centrally so that the width dimensions of corresponding sheets in the part stacks are substantially identical.

In a further embodiment the adjacent sheets may be staggered uniformly throughout the stack and the cut may be offset from the centre of the stack so that the width dimensions of corresponding sheets in the part stacks are different whereby the ends of the sheets overlap in the joined part stacks.

In a yet further embodiment at least some of the adjacent sheets may be staggered non-uniformly throughout the stack so that the width dimensions of corresponding sheets in the part stacks are different whereby the ends of the sheets overlap in the joined part stacks.

In such further embodiments the width dimension of at least one of the outer sheets of the stack may differ from that of the remaining sheets to ensure that the assembled part stacks have a substantially uniform width dimension, and the term "predetermined substantially similar width dimension" is to be construed accordingly.

The invention will now be described by way of example only and with reference to the accompanying drawings in which,

Figures 1 to 3 inclusive illustrate the steps in a method for manufacturing a component of f.r.p. material having a wedge-shaped cross section according to one embodiment of the invention,

Figure 4 is an end view of a stack of sheets of f.r.p. material arranged according to a further embodiment,

Figure 5 is a schematic illustration of a finished component constructed from the stack of Figure 4, and

Figure 6 is a plan view of a sheet of material for use in this invention and illustrating various fibre orientations.

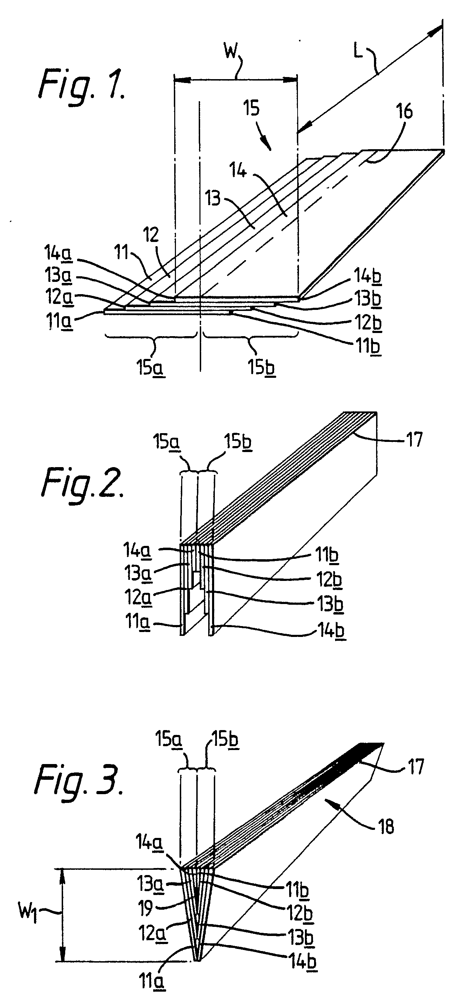

Referring now to Figures 1 to 3 inclusive, four sheets 11, 12, 13, 14 of pre-impregnated f.r.p. material are cut to a desired length dimension L and a predetermined substantially similar width dimension W.

The sheets are laid longitudinally one on top of the other to form a stack 15 and adjacent sheets are progressively staggered by a uniform amount in a width-wise direction.

The stack 15 is partially consolidated and then slit longitudinally along a central cut line 16 to form part stacks 15a and 15b. For convenience, the ends of the respective sheets 11 to 14 are identified in part stack 15a by suffix a and those of part stack 15b by the suffix b and it will be seen that on both part stacks 15a and 15b the width of individual sheets from the cut edges vary from a minimum width dimension at one side to a maximum width dimension at the other side.

The part stacks 15a and 15b are oriented and joined so that the cut edges form a common edge 17 of the joined part stacks 15a and 15b and preferably, as illustrated in Figure 2, the part stacks 15a and 15b are arranged so that the minimum width dimension sheets 14a and 11b are located adjacent each other at the centre of the assembly.

It will be apparent that the thickness of f.r.p. material varies generally uniformly throughout the width dimension $W_1$ (Figure 3) of the assembled part stacks 15a and 15b so that, when consolidated in appropriate tooling (not shown), a component 18 is readily formed having a wedge-shaped cross-sectional shape as illustrated in Figure 3.

The orientation of the direction of the fibres in individual sheets 11 to 14 will be chosen and adjusted to suit the operational requirements of the finished component 18 and the device in which it is to be fitted or to form a part.

Component 18 may be used individually in an assembly for example as a filler device or, alternatively, a plurality of components 18 may be used to form a cylindrical or part cylindrical assembly.

In the embodiment illustrated in Figures 1 to 3 in which the width of the sheets of stack 15 are identical, the sheets are staggered uniformly throughout the stack 15 and the cut line 16 is central of the stack 15, the width dimension of corresponding individual sheets i.e. sheets 14a and 11b, of each part stack 15a and 15b are substantially identical. When the part stacks are assembled so as to extend from the common edge 17, gaps such as indicated at 19 in Figure 3 may occur between the ends of the pair of sheets 14a and 11b and between the next pair 13a and 12b and so on throughout the assembly.

An unillustrated embodiment envisages a modification to automatically infill such gaps 19 which comprises offsetting the cut line 16 from the centre of the stack 15 so that the width dimension of corresponding part sheets varies between the part stacks 15a and 15b. For example, sheets 11b, 12b and 13b of part stack 15b may have a greater width dimension than the corresponding sheets 12a, 13a and 14a of part stack 15a so that the sheets automatically overlap each other to infill the aforementioned gaps 19 during consolidation of the assembly. In such an embodiment, the width dimension W of at least one of the outer sheets 11 or 14 of stack 15 may vary slightly from the remainder to ensure that the width dimension $W_1$ of assembled part stacks 15a and 15b remains substantially the same.

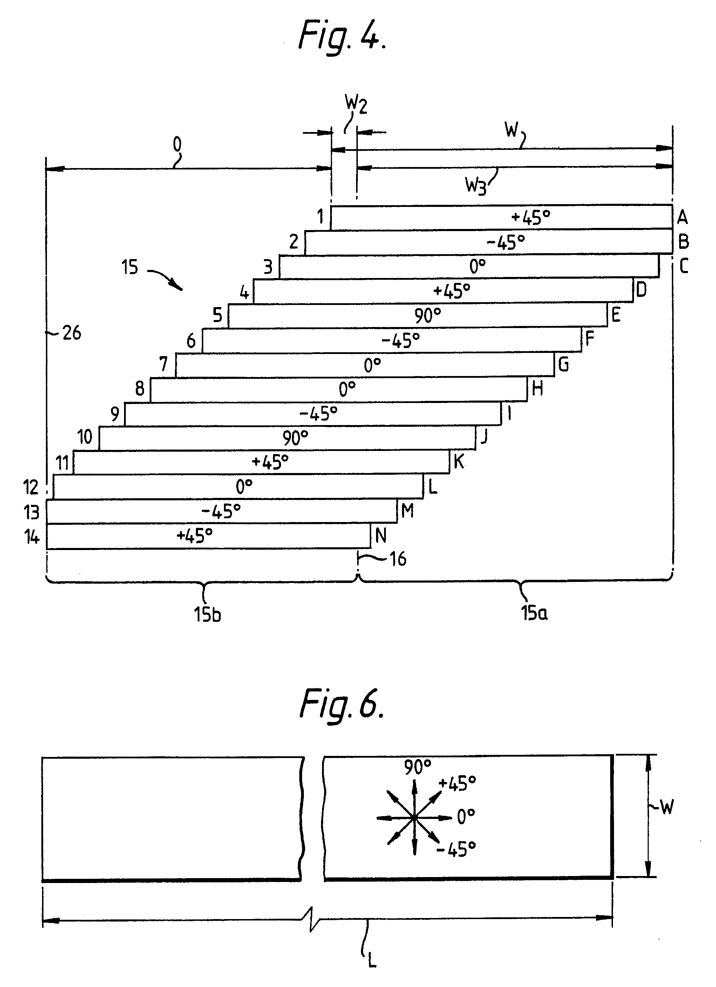

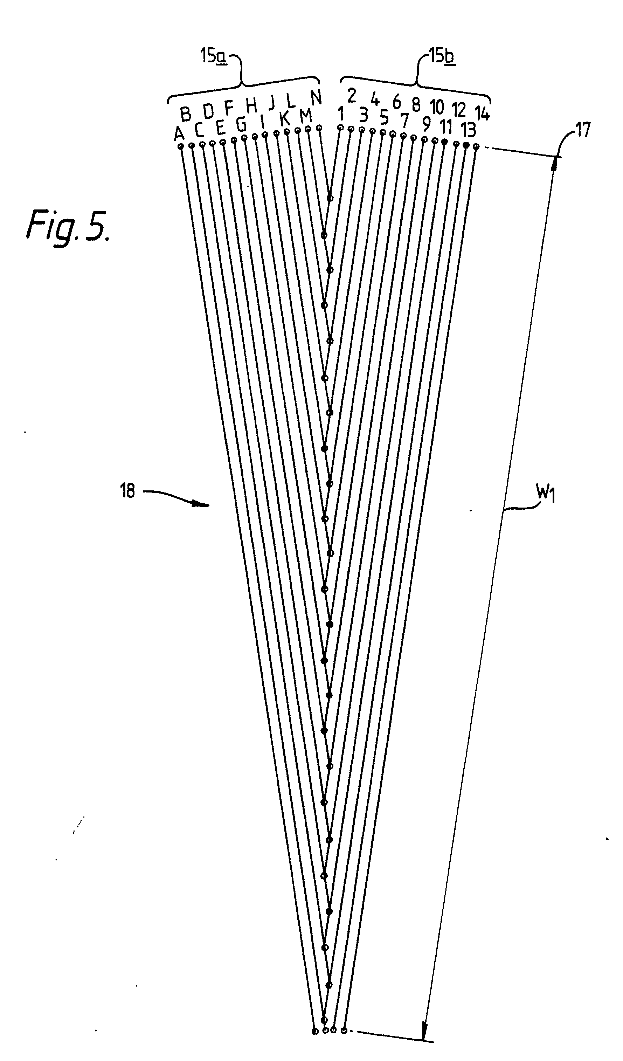

A similar facility can be achieved by staggering at least some of the individual sheets non-uniformly through the stack and such an embodiment is illustrated in Figures 4 and 5 in which like reference numerals have been used where convenient. In this embodiment fourteen sheets of pre-impregnated f.r.p. material are cut to a desired length dimension L and predetermined width dimensions W which vary slightly through the stack 15 as hereinafter explained. In Figure 4, the thickness of the individual sheets which typically may be about 0.152mm has been exaggerated for clarity.

The sheets are laid longitudinally one on top of the other to form a stack 15 and adjacent sheets are progressively staggered in a widthwise direction as before and as illustrated in Figure 4. As shown the parts of each of the sheets to the left of cut line 16 forming part stack 15b are identified by numerals 1 to 14 inclusive and the parts of each of the sheets to the right of the cut line 16 forming part stack 15a are identified by the letters A to N inclusive.

Thus, for example, the top sheet of the stack comprises the part sheet numbered 1 having a width dimension $W_2$ and the part sheet lettered A having a width dimension $W_3$ so that the predetermined similar width dimension W is the sum of width dimensions $W_2$ and $W_3$. Table 1 provides data for the particular lay-up of stack 15 of Figure 4 and includes information in column 19 on the orientation of fibre direction in each of the individual sheets which should be read with reference to the directions indicated in Figure 6.

All dimensions in Table 1 are in millimetres. Column 20 refers to the numbered part-sheets and column 21 gives their respective width dimensions $W_2$. Column 22 refers to the lettered part-sheets and column 23 gives their respective width dimensions $W_3$. Column 24 gives the total width dimensions W ($W_2 + W_3$) and it will be seen that in this embodiment the dimensions w of the outer five sheets of stack 15 vary slightly from the constant width dimensions W of the inner nine sheets.

Column 25 gives the offset dimension O (or stagger) in respect of the individual sheets from a vertical datum line 26 coincident with an edge of the stack 15 and parallel to the cut line 16. It will be noted that the offset of sheet 12L and that between sheets 12L and 11K is less than the uniform offset between edges of the remaining sheets.

TABLE 1

| 19 Ply Bias | 20 Ply Ident | 21 Width (W2) | 22 Ply Ident | 23 Width (W3) | 24 Total Width W | 25 Ply Offset From Datum Line |
|---|---|---|---|---|---|---|
| +45° | 1 | 4.05 | A | 48.48 | 52.53 | 44.42 |
| -45° | 2 | 8.09 | B | 48.48 | 56.57 | 40.38 |
| 0° | 3 | 12.13 | C | 46.46 | 58.59 | 36.34 |
| +45° | 4 | 16.17 | D | 42.42 | 58.59 | 32.31 |
| 90° | 5 | 20.21 | E | 38.38 | 58.59 | 28.27 |
| -45° | 6 | 24.25 | F | 34.34 | 58.59 | 24.23 |
| 0° | 7 | 28.28 | G | 30.31 | 58.59 | 20.19 |
| 0° | 8 | 32.32 | H | 26.27 | 58.59 | 16.15 |
| -45° | 9 | 36.36 | I | 22.23 | 58.59 | 12.11 |
| 90° | 10 | 40.40 | J | 18.19 | 58.59 | 8.07 |
| +45° | 11 | 44.44 | K | 14.15 | 58.59 | 4.04 |
| 0° | 12 | 47.47 | L | 10.11 | 57.58 | 1.00 |
| -45° | 13 | 48.48 | M | 6.07 | 54.55 | 0 |
| +45° | 14 | 48.48 | N | 2.03 | 50.51 | 0 |

Cut line 16 is located at a dimension of 48.48 mm from datum line 26 which positions it centrally of an overall width dimension of the stack 15 taken from the datum line 26.

As before the part stacks 15a and 15b are oriented and joined so that the cut edges form a common edge 17 as shown schematically in Figure 5, and are arranged so that the minimum width dimension sheets (number 1 and letter N) are located adjacent each other at the centre of the assembly. However it will be noted in this embodiment that due mainly to the non-uniform offset O or stagger of the sheets and to a lesser extent also to the predetermined differences between the width dimensions W, the inner ends of the sheets overlap each other throughout the assembly thereby avoiding the possibility of gaps or voids occurring at the ends of mated sheets during consolidation as hereinbefore discussed with reference to the previous illustrated embodiment. This is clearly shown in the schematic illustration of Figure 5 where sheet 1 overlaps sheet N, sheet M overlaps sheet 1, sheet 2 overlaps sheet M and so on to the bottom of the component 18 where sheet 12 overlaps sheet C.

The small differences in the predetermined width dimensions W of the outer sheets of the stack (column 24 Table 1) also ensures that the width dimension $W_1$ (Figure 5) of the assembled part stacks 15a and 15b is substantially the same throughout the assembled component 18.

Thus, the method of this invention utilises a plurality of sheets of f.r.p. material having predetermined substantially similar width dimensions in the manufacture of wedge-shaped components, and which eliminates the prior requirement to cut, handle and lay sheets having very small width dimensions. The method is simple and amenable to either hand or automated lay-up techniques, it is not wasteful of material and enables the ready orientation of fibre direction to ensure desired physical properties in the finished component. Additionally, the method is eminently suited to the manufacture of long wedge-shaped components.

Whilst several embodiments of the invention have been described and illustrated it will be understood that many modifications may be made without departing from the scope of the invention. For example whilst in the illustrated embodiments the minimum width dimension sheets are located adjacent each other and longitudinally through the centre of the component to provide uninterrupted external surfaces, in an alternative embodiment one or both of the part stacks 15a and 15b may be oriented with the minimum width dimension sheets, e.g. sheets 11b and 14a, externally of the component so that the surfaces of the wedge-shaped component may be stepped surfaces. Such an arrangement also prevents the formation of the aforementioned gaps as may be experienced in the embodiment illustrated in Figures 1 to 3. Any desired number of sheets of f.r.p. material may be used in forming the stack 15.

**Claims**

1. A method for producing a component having a generally wedge-shaped cross section from fibre reinforced plastic material characterised by the steps of cutting a plurality of sheets of material to a desired length and a predetermined substantially similar width dimension, laying said sheets in a stack with adjacent sheets staggered in a width-wise direction, cutting the stack longitudinally to form two part stacks in which the widths of the individual sheets from the cut edges vary throughout the thickness of each part stack from a minimum width dimension to a maximum width dimension, orienting and joining the part stacks so that the cut edges form a common edge of the joined part stacks, and consolidating and curing the assembly to form the component.

2. The method of Claim 1, further characterised in that said minimum width dimension sheets of the part stacks are located adjacent each other at the centre of the joined part stacks.

3. The method of Claim 1 or Claim 2, further characterised in that said adjacent sheets are staggered uniformly throughout the stack and the stack is cut centrally so that the width dimensions of corresponding sheets in the part stacks are substantially identical.

4. The method of Claim 1 or Claim 2, further characterised in that said adjacent sheets are staggered uniformly throughout the stack and the cut is offset from the centre of the stack so that the width dimensions of corresponding sheets in the part stacks are different whereby the ends of the sheets overlap in the joined part stacks.

5. The method of Claim 1 or Claim 2, further characterised in that at least some of said adjacent sheets are staggered non-uniformly throughout the stack so that the width dimensions of corresponding sheets in the part stacks are different whereby the ends of the sheets overlap in the joined part stacks.

6. The method of Claim 4 or Claim 5, further characterised in that the width dimension of at least one of the outer sheets of the stack differs from that of the remaining sheets to ensure that the assembled part stacks have a substantially uniform width dimension.

7. A component of fibre reinforced plastic material having a wedge-shaped cross sectional shape and constructed according to the method of any of the preceding claims.

*Fig. 1.*

*Fig. 2.*

*Fig. 3.*

## Fig. 4.

| | | |
|---|---|---|
| 1 | +45° | A |
| 2 | −45° | B |
| 3 | 0° | C |
| 4 | +45° | D |
| 5 | 90° | E |
| 6 | −45° | F |
| 7 | 0° | G |
| 8 | 0° | H |
| 9 | −45° | I |
| 10 | 90° | J |
| 11 | +45° | K |
| 12 | 0° | L |
| 13 | −45° | M |
| 14 | +45° | N |

$W_2$ $W$ $W_3$ 0 15 26 16 15b 15a

## Fig. 6.

90° +45° 0° −45°

W L

Fig.5.